# EUROPEAN PATENT SPECIFICATION

(11) **EP 2 655 048 B1**
(45) Date of publication and mention of the grant of the patent: **04.01.2017**
(21) Application number: 11813348.7
(22) Date of filing: 28.11.2011
(51) Int. Cl.: B29L 30/00, B29C 47/00, G01N 21/892, G01N 21/94, G01N 21/84, B29D 30/00, B29C 47/92, G01N 21/89

(54) **A METHOD AND AN APPARATUS FOR CONTROLLING PRODUCTION AND FEEDING OF SEMIFINISHED PRODUCTS IN A TYRE BUILDING PROCESS**
VERFAHREN UND VORRICHTUNG ZUR PRODUKTIONSSTEUERUNG UND ZUM ZUFÜHREN VON HALBZEUG IN EINEM REIFENHERSTELLVERFAHREN
PROCÉDÉ ET UN APPAREIL DE COMMANDE DE PRODUCTION ET ALIMENTATION DES DEMI-PRODUITS DANS UN PROCÉDÉ DE FABRICATION DES PNEUMATIQUES

(30) Priority: 23.12.2010 IT MI20102378; 30.12.2010 US 201061428482 P
(43) Date of publication of application: 30.10.2013
(73) Proprietor: Pirelli Tyre S.p.A., 20126 Milano (IT)
(72) Inventor: BALLABIO, Michele, I-Viale Sarca 222 (IT); LO PRESTI, Gaetano, I-Viale Sarca 222 (IT); MONTRUCCHIO, Bartolomeo, I-10129 TORINO (IT); ORLANDO, Vincenzo, I-10146 TORINO (IT)
(74) Representative: Tansini, Elio Fabrizio
(86) International application number: PCT/IB2011/002851
(87) International publication number: WO 2012/085632

(56) References cited:
- WO-A1-2007/051335
- WO-A2-2008/105656
- DE-A1- 3 936 614
- DE-A1- 10 321 770
- JP-A- 1 162 137
- JP-A- 63 285 453
- US-A- 4 253 113
- US-A- 5 680 473

## Description

The invention relates to a method for controlling production and feeding of semifinished products in a tyre building process.

The invention further concerns an apparatus for controlling production and feeding of semifinished products in a tyre building process.

A tyre for vehicle wheels generally comprises a carcass structure including at least one carcass ply having respectively opposite end flaps in engagement with respective annular anchoring structures, integrated into the regions usually identified as "beads", defining the radially internal circumferential edges of the tyre.

Associated with the carcass structure is a belt structure including one or more belt layers, disposed in radially superposed relationship with each other and the carcass ply, provided with textile or metallic reinforcing cords having crossed orientation and/or substantially parallel to the circumferential extension direction of the tyre. A tread band, also of elastomeric material like other semifinished products constituting the tyre, is applied at a radially external position.

In addition, respective sidewalls of elastomeric material are applied at an axially external position to the side surfaces of the carcass structure, each extending from one of the side edges of the tread band until close to the respective annular anchoring structure to the beads. In tyres of the "tubeless" type, an airtight coating layer usually referred to as "liner" covers the inner tyre surfaces.

In particular, the invention applies in processes in which the tyres are built by associating elementary semifinished products with each other by laying them on suitable forming drums.

Depending on the type of process used, the forming drum can have a substantially toroidal or substantially cylindrical conformation.

In the present specification and the following claims by "semifinished product" it is intended a continuous elongated element having flattened transverse section, made of elastomeric material and embedding one or more textile or metallic reinforcing cords disposed parallel to each other in the longitudinal direction of the elongated element itself.

In the following of the present specification and in the appended claims the expression "elementary semifinished product" is understood as indicating a section cut to size of said semifinished product, said elementary semifinished product being in the following referred to as "strip-like element".

The strip-like elements, suitably disposed adjacent to each other or partly mutually overlapped, contribute in forming the different components of a tyre.

In particular, the strip-like elements can be used for making one or more carcass plies of the carcass structure and/or one or more belt strips or layers of the tyre belt structure.

Document DE 103 21 770 A1 (CONTINENTAL AG [DE]) discloses a process for the checking of calendered material strips (semi-finished products) consisting of textile or steel reinforcing strips coated on both sides with a rubber compound wherein the material leaving the calendar is optically monitored on both sides by cameras, from which recorded data is subject to further processing for the localized identification of defects in the material strip. Document JP 63 285453 A (BRIDGESTONE CORP) discloses a method for detecting whether an object is mixed into the surface of a base material differing from the object and, more specifically, relates to a method for determining whether cords formed by organic synthetic fibers, embedded within the side surface of ply cord used in the production of tires, are partially exposed.

Document WO 2008/105656 A2 (VMI EPE HOLLAND [NL];GRASHUIS JAN KORNELIS [NL]; JANSZEN CORNELIS WOU) discloses a device for manufacturing a rubber strip material comprising cord material. The device comprises an extruder with an integrated gear pump with adjustable pump speed and with a conveying screw for extruding unvulcanised rubber around the cord material for the purpose of producing a continuous rubber strip. The device furthermore comprises a control unit for adjusting the pump speed of the gear pump, a measuring unit for measuring the height and the width of the rubber strip and for emitting a measuring signal indicative of the measured height and width.

Document JP 1 162137 A (KAWASAKI STEEL C0) discloses a shape inspector that inspects the presence or absence of a defect in plate material while running, a primary decision means that judges the presence or absence of a defect provisionally at a high speed based on one-dimensional information from a line-type image sensor, and a secondary decision means that is only started when said primary decision means has judged finally the presence of a defect and that judges the presence or absence of a defect based on two-dimensional information from an area-type image sensor.

Document US 4 253 113 A (DECAVEL BERNARD ET AL) discloses an apparatus for detecting surface defects on a continuous band travelling at high speed, comprising a device for illuminating a zone in which the band travels, a television camera having for each frame a constant exposure time so related to the speed of travel of the band as to record on the camera television tube a substantially instantaneous image of the portion of the band which is within said zone during the exposure time.

Document DE 39 36 614 A1 (SCHAEFER GUENTER [DE]) discloses a process and a measuring device for the detection and control of the speed of movement of sensitive elongated materials, e.g. tapes, filaments, fibres etc. allowing contactless detection of the speed of movement of highly sensitive elongated products, with the highest degree of accuracy in reproduction.

The Applicant has noticed that, with reference to said semifinished products, there are different factors that can impair the tyre quality. First of all, the semifinished products can have an uneven distribution of the elastomeric matrix in which the reinforcing cords are embedded, due to faults in the production process of the semifinished products themselves. This results in the presence of regions in which the elastomeric material is absent, or at least present in an insufficient amount. It may also happen that, due to flaws in the production process, positioning of the reinforcing cords is not correct, so that one or more cords emerge from the elastomeric matrix at least partly. Conversely, for a precise arrangement of the cords, the latter must be fully buried in the elastomeric material and therefore must not appear at the outside.

The Applicant has verified that a further factor that can adversely affect the tyre quality is represented by the presence on the outer surface of the semifinished products of foreign bodies that can inhibit correct and full adhesion of the semifinished products to the forming support and/or other parts of the tyre being processed. These foreign bodies can for example consist of material scraps present in the production environment, that lay on the surface of the semifinished products. In addition, the foreign bodies can result from rests of protection films used in possible steps for the semifinished product storage, i.e. between production of the semifinished products and building of the tyre.

The Applicant has verified that the solutions known in the art are not able to detect the presence of faults in the structure of the semifinished products and/or the presence of foreign bodies on the outer surface of said semifinished products in a simple, cheap and reliable manner. In particular, to enable the control systems of known type to be efficiently applied without reducing the production and/or deposition times of the semifinished products, high-performance detection structures, as well as apparatus having a very high hardware/software complexity, are required to be used.

The Applicant has perceived that it is possible to drastically reduce the hardware requirements of the system and the computational complexity of the software used by detecting images or photograms with a longer exposure time as compared with conventional "snapshot" images during movement of the semifinished product. In this way, these detected images or photograms are representative of the integral or superposition, in the exposure time, of the snapshot images representing the semifinished product during running of same, in the production process of the semifinished product itself or in the tyre building process. In other words, the semifinished product is caused to run in front of a detection device to a given speed; the detection device is adjusted in such a manner that the exposure time used for detecting the images allows a portion of the semifinished product to be represented in a single image having much bigger sizes than those of the portion that could be represented with a single "snapshot" image. At all events, since the size of the detected image is substantially identical with that of a hypothetical snapshot image, the representation of a greater portion of the semifinished product is obtained through superposition (or, as above said and more precisely, through integral) of the hypothetical snapshot images that would have been detected during the whole exposure time.

The Applicant has therefore found that control of the production and feeding of the semifinished elements can be carried out by making a semifinished product run in front of a detection device at a speed included between about 0.1 m/s and about 2 m/s, by adjusting the detection device in such a manner that the exposure time used for detection of the images is included between about 0.1 s and about 1 s. The image thus detected is compared with one or more reference parameters, so as to determine the presence of possible faults or foreign bodies on the portion of semifinished product represented in such an image. Should the comparison detect the presence of faults or foreign bodies, a suitable notification signal is generated.

In accordance with a first aspect, the invention relates to a method for controlling production and feeding of semifinished products in a tyre building process, comprising:
- providing at least one first image-detection device;
- moving at least one first semifinished product at a first speed relative to said first detection device, along a first advancing direction;
- detecting at least one main image of said first semifinished product through said first detection device;
- controlling movement of said first semifinished product in such a manner that said first speed is included between about 0.1 m/s and about 2 m/s;
- controlling said first detection device in such a manner that the exposure time for detecting said at least one main image be included between about 0.1 s and about 1 s;
- carrying out a first comparison between said main image and one or more prestored first parameters;
- generating a notification signal as a function of said first comparison.

It is the Applicant's opinion that in the image thus detected, even if it is seemingly characterised by reduced information contents, all the essential information required for determining the quality of the identified semifinished product portion are at all events present. The fundamental datum that is deemed necessary is the presence or not of faults or foreign bodies on a portion of semifinished product; in fact the precise identification of the position of these faults or foreign bodies is not considered as essential. Actually, for the decisions that must be taken as a function of the performed analysis, only the presence or not of unevenness in the rubberizing or the presence or not of foreign bodies on the surface is required as the input datum. By way of example, The decision to be taken may concern rejection of the strip-like element (i.e. the portion of semifinished product cut to size) having unacceptable features; this operation is performed irrespective of the specific position of the fault on the strip-like element itself. In other words, the control results on the strip-like elements can be reduced to the information about "acceptable" or "unacceptable" type; this can leave out of consideration the precise positioning of the fault on the strip-like element.

In accordance with a second aspect, the invention relates to an apparatus for controlling production and feeding of semifinished products in a tyre building process, comprising:
- at least one first image-detection device;
- an actuating member for moving at least one first semifinished product at a first speed relative to said first detection device, along a first advancing direction, said first detection device being configured for detecting at least one main image of said first semifinished product;
- a control unit configured for:
   - controlling said actuating member in such a manner that said first speed is included between about 0.1 m/s and about 2 m/s;
   - controlling said first detection device in such a manner that the exposure time for detection of said at least one main image is included between about 0.1 s and about 1 s;
- carrying out a first comparison between said main image and one or more prestored first parameters;
   - generating a notification signal as a function of said first comparison.

The present invention, in accordance with one of said aspects, can have one or more of the preferred features hereinafter described.

Preferably, said first speed is included between about 0.5 m/s and about 1.4 m/s.

More preferably, said first speed is included between about 0.8 m/s and about 1.2 m/s.

Preferably, the exposure time for said main image is included between about 0.2 s and about 0.7 s.

More preferably, the exposure time for said main image is included between about 0.4 s and about 0.6 s.

Preferably, said first detection device is provided with an acquisition window having a major extension direction, said first advancing direction of the first semifinished product being substantially orthogonal to said major extension direction.

Preferably, said method further comprises provision of at least one first emitter device for sending the radiation towards said first semifinished product, said first detection device being in particular coupled to said first emitter device for receiving the reflected radiation from said first semifinished product and detecting said at least one main image.

Preferably, the first detection device is positioned along a first detection axis joining said first detection device to the portion of said first semifinished product impinged on by the radiation emitted by said first emitter device.

Preferably, the first emitter device is positioned along a first emission axis joining said first emitter device to the portion of the first semifinished product impinged on by said radiation.

Preferably, the first detection axis defines an angle included between about 30° and about 60° with the first emission axis.

Preferably, said prestored first parameters are defined as a function of previous detecting operations on said first semifinished product carried out by said first detection device.

In particular, said first parameters are defined on a statistical basis, as a function of said previous detecting operations.

Preferably, said method further comprises:
- providing a second detection device on the opposite side of said first detection device relative to said first semifinished product;
- through said second detection device, detecting at least one auxiliary image of said first semifinished product;
- controlling said second detection device so that the exposure time for detection of said at least one auxiliary image is included between about 0.1 s and about 1 s;
- carrying out a second comparison between said auxiliary image and one or more prestored second parameters;
- generating a notification signal as a function of said second comparison.

Preferably, the exposure time for said at least one auxiliary image is included between about 0.2 s and about 0.7 s.

More preferably, the exposure time for said at least one auxiliary image is included between about 0.4 s and about 0.6 s.

Preferably, said method further comprises provision of at least one second emitter device for sending the radiation towards said first semifinished product, said second detection device being coupled to said second emitter device for receiving the reflected radiation from said first semifinished product and detecting said at least one auxiliary image.

Preferably, said second detection device is positioned along a second detection axis joining said second detection device to the portion of said first semifinished product impinged on by the radiation emitted by said second emitter device.

Preferably, said second emitter device is positioned along a second emission axis joining said second emitter device to the portion of said first semifinished product impinged on by said second emitted radiation.

In particular, said second detection axis defines an angle included between about 30° and about 60°, with said second emission axis.

Preferably, said prestored second parameters are defined as a function of previous detecting operations on said first semifinished product.

In particular, said previous detecting operations on said first semifinished product are carried out by said second detection device.

Preferably, said second parameters are defined on a statistical basis, as a function of said previous detecting operations.

Preferably, said method further comprises:
- moving a second semifinished product at a second speed relative to said first detection device and second detection device, along a second advancing direction, said second speed being included between about 0.1 m/s and about 2 m/s,
said main image and auxiliary image being also representative of said second semifinished product.

Preferably, the second speed is substantially the same as the first speed.

Preferably, the second advancing direction is substantially parallel to the first advancing direction.

Preferably, said control unit is configured for defining said prestored first parameters as a function of previous detecting operations on said first semifinished product carried out by said first detection device.

According to a preferred embodiment, provision is made for a second detection device positioned on the opposite side of said first detection device relative to said semifinished product, and provided for detecting at least one auxiliary image of said first semifinished product, said control unit being operatively associated with said second detection device for controlling the latter in such a manner that the exposure time for detection of said at least one auxiliary image is included between about 0.1 s and about 1 s, said control unit being configured for: carrying out a second comparison between said auxiliary image and one or more prestored second parameters; generating a notification signal as a function of said second comparison.

Preferably, said control unit is configured for defining said prestored second parameters as a function of previous detecting operations on said first semifinished product.

Preferably, said actuating member is designed to move a second semifinished product at a second speed relative to said first detection device and second detection device, along a second advancing direction, said second speed being included between about 0.1 m/s and about 2 m/s, said main image and auxiliary image being representative of said second semifinished product too.

Further features and advantages will become more apparent from the detailed description of a preferred and non-limiting embodiment of the invention.

This description is taken hereinafter with reference to the accompanying drawings, also given by way of non-limiting example, in which:
- Fig. 1a diagrammatically represents an apparatus for putting into practice the method of the present invention;
- Fig. 1b shows an apparatus similar to that shown in Fig. 1a, applied in a different context within a tyre building process;
- Figs. 2a, 2b and 2c diagrammatically show images detected and processed in the method and the apparatus according to the invention;
- Fig. 3 diagrammatically shows a detail of a device used in the apparatus in Figs. 1a and 1b;
- Fig. 4 shows a detail of a preferred embodiment of the invention;
- Fig. 5 diagrammatically shows an image detected and processed in the preferred embodiment of Fig. 4;
- Fig. 6 shows a table in which parameters usable in the method and apparatus of the invention are reproduced.

With reference to the accompanying figures, an apparatus in accordance with the present invention has been generally identified by reference numeral 1.

Apparatus 1, and the method carried out by said apparatus being part of the present invention as well, operate on semifinished products used in tyre building.

Preferably, the semifinished product 2 on which apparatus 1 and the related method operate has a substantially rectangular transverse section, of a width included between about 10 mm and about 50 mm, preferably between about 15 mm and about 40 mm. Preferably, the thickness of the semifinished product 2 is included between about 0.5 mm and about 1.5 mm and more preferably between about 0.7 mm and about 1.3 mm.

The number and material of the cords can vary as a function of the type of semifinished product and tyre that is wished to be obtained.

The semifinished product 2 is preferably produced in an extrusion station and subsequently wound up into reels to be stored.

When building of a tyre actually takes place, the reels are unwound, and the semifinished product 2 is cut to size, so as to obtain the so-called strip-like elements (elementary semifinished products). Said strip-like elements are then disposed adjacent to each other and/or superposed for building the tyre.

In particular, the strip-like elements can be used for making one or more carcass plies of the carcass structure and/or one or more belt strips or layers of the tyre belt structure.

Apparatus 1 and the relevant method can be advantageously used between production and storage of the semifinished product reels and/or between unwinding and cutting to size of the semifinished product for building the tyre.

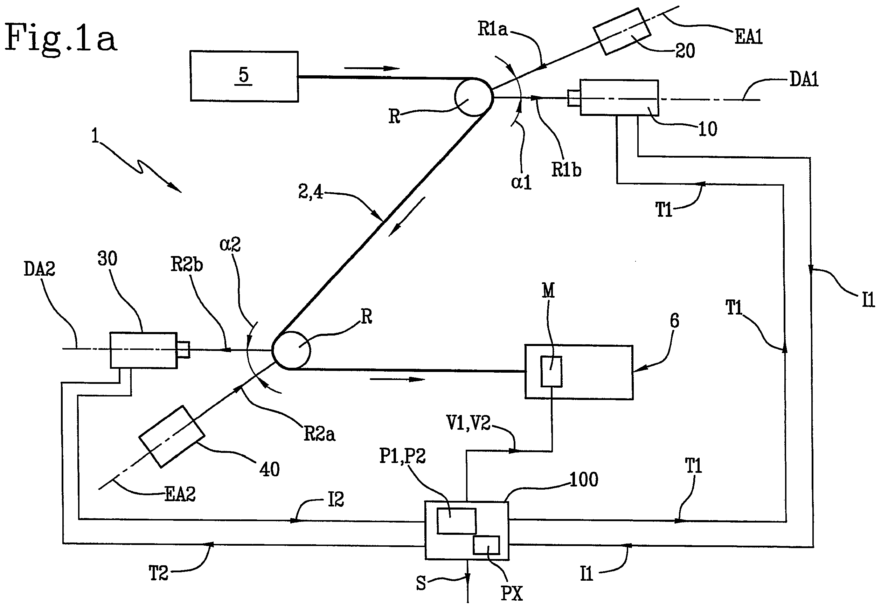

In this regard, the figure 1a shows application of the invention in the first context: reference numeral 5 diagrammatically identifies an extrusion station, while reference numeral 6 identifies a collection station, in which the semifinished product 2 is wound to form reels to be stored.

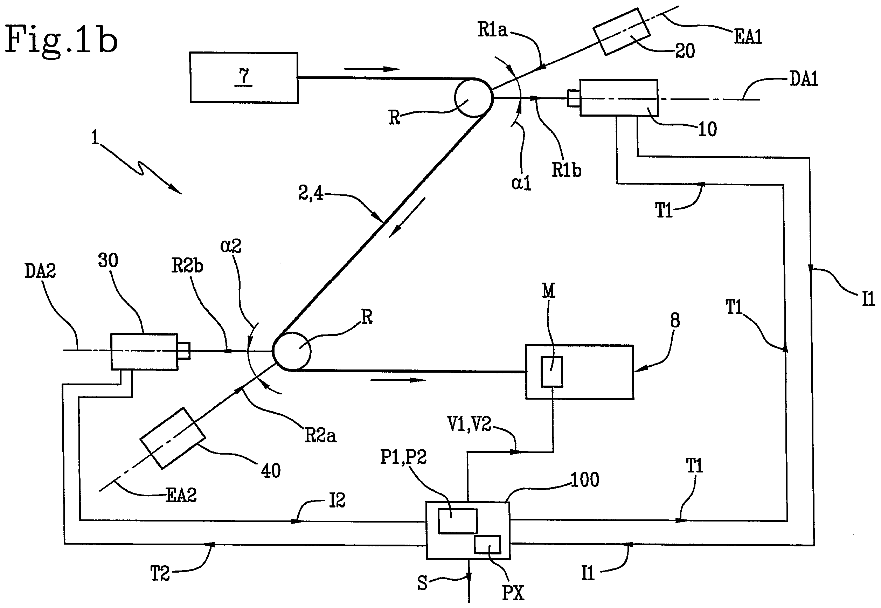

Fig. 1b on the contrary shows an application of the invention when a tyre is being built: reference numeral 7 identifies an unwinding station of the semifinished product reels, and reference numeral 8 identifies an operating station in which the semifinished product is cut to size and the strip-like elements thus obtained are laid on suitable forming supports for tyre building.

As better clarified in the following, the method and apparatus of the invention operate in a substantially identical manner in the two contexts; maybe a difference can be seen in the typology of the notification signals generated and the information incorporated thereinto.

The method according to the invention first of all comprises provision of at least one first image-detection device 10.

Preferably, the first detection device 10 comprises a digital camera.

By way of example, a digital camera provided with monochromatic CCD detector or sensor can be used. Preferably, the first detection device 10 comprises a lens. More preferably the first detection device 10 also comprises a filter to optimise the detection operations.

In particular, the filter can be useful for coupling with the emitter device to be described in the following.

The method further comprises moving the first semifinished product 2 at a first speed V1, relative to the first detection device 10, along a first advancing direction D1.

As diagrammatically shown in Fig. 1a, movement of the first semifinished product 2 can take place from the extrusion station 5 to the collection station 6.

Differently, in the application in Fig. 1b, movement of the first semifinished product 2 takes place from the unwinding station 7 to the operating station 8.
The collection station 6 and/or operating station 8, in particular, can be provided with an actuating member M, such as one or more powered drawing rollers, through which the first semifinished product 2 is moved.

Practically, the first semifinished product 2 is caused to run in front of the first detection device 10 along a substantially fixed path. By way of example, this path can be defined by one or more rollers R.

The first detecting device 10 can therefore detect at least one main image I1 of the first semifinished product 2.

Preferably, the detection device 10 detects a plurality of main images I1 of the first semifinished product 2.

The first detection device 10 is such controlled that the exposure time T1 for detection of said at least one main image I1 is included between about 0.1 s and about 1 s. Preferably, the exposure time T1 for the main image I1 is included between about 0.2 s and about 0.7 s and more preferably between about 0.4 s and about 0.6 s.

Movement of the first semifinished product 2 is such controlled that the first speed V1 is included between about 0.1 m/s and about 2 m/s. Preferably, the first speed V1 is included between about 0.5 m/s and about 1.4 m/s, and more preferably between about 0.8 m/s and about 1.2 m/s.

Practically, while the first semifinished product 2 is running in front of the first detection device 10, the latter detects one or more main images I1 representative of the first semifinished product 2.

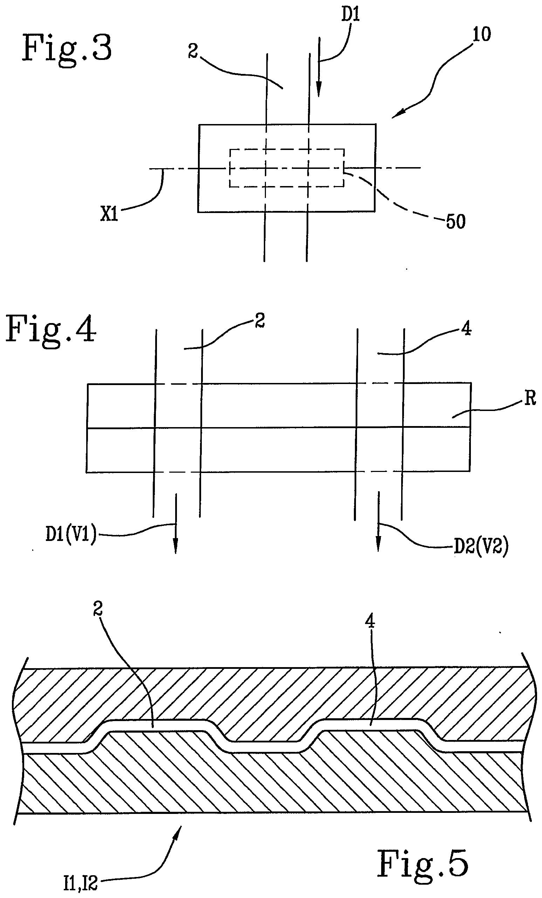

In a preferred embodiment, the first detection device 10 is provided with one acquisition window 50 (Fig. 3) having a major extension direction X1; the first advancing direction D1 of the first semifinished product 2 is substantially orthogonal to said major extension direction X1.

Practically, taking the horizontal ground surface as the reference, the major extension direction X1 can be substantially horizontal, while the advancing direction D1 of the first semifinished product 2 can be substantially vertical, or at least can have an important component in the vertical direction.

By way of example, the greater size of the acquisition window 50 can be included between about 400 and about 800 pixels, while the smaller size can be included between about 50 and about 200 pixels.

Preferably, the method of the invention further comprises provision of at least one first emitter device 20 to send a first emitted radiation R1a to the first semifinished product 2.

The first detection device 10 is thus coupled to the first emitter device 20 for receiving a first reflected radiation R1b from the first semifinished product 2 and detecting said at least one main image I1.

The first emitted radiation R1a can preferably be laser radiation, in particular emitted from a diode; by way of example, the first emitted radiation R1a can have a wavelength included between about 600 nm and about 650 nm.

Preferably, the first emitted radiation R1a is a so-called "laser blade", i.e. radiation that, when it strikes on a surface substantially orthogonal to its propagation direction, generates a substantially linear, practically rectangular, luminous shape having one dimension much greater than the other.

Practically, it happens that the laser beam emitted by the first emitter device 20 is deformed by the first semifinished product 2 when it passes, and the first detection device 10 generates said at least one auxiliary image I1 representing this phenomenon.

Preferably, use of a dark (e.g. substantially black) reference surface to enable suitable contrast between the light blade to be detected and the background on which it takes its place is provided.

By way of example, rollers R can be provided with an outer surface of this nature, and the first detection device 10 and the first emitter device 20 can exactly operate on the portion of semifinished product 2 resting on one of said rollers R.

As diagrammatically shown in Figs. 1a and 1b, the first detection device 10 and the first emitter device 20 can have a particular mutual positioning.

In particular, the first detection device 10 is positioned along a first detection axis DA1 joining the first detection device 10 to the portion of the first semifinished product 2 impinged on by the first emitted radiation R1a emitted by the first emitter device 20.

The emitter device 20 on the contrary is positioned along a first emission axis EA1 joining the first emitter device 20 to the first-semifinished product portion impinged on by the first emitted radiation R1a.

Preferably, the first detection axis DA1 defines an angle α1 included between about 30° and about 60° with the first emission axis EA1. By way of example, angle α1 can be of about 45°.

In this way, on detection, a good compromise is obtained between intensity of the detected radiation and capability of evaluating the detected thickness of the first semifinished product 2.

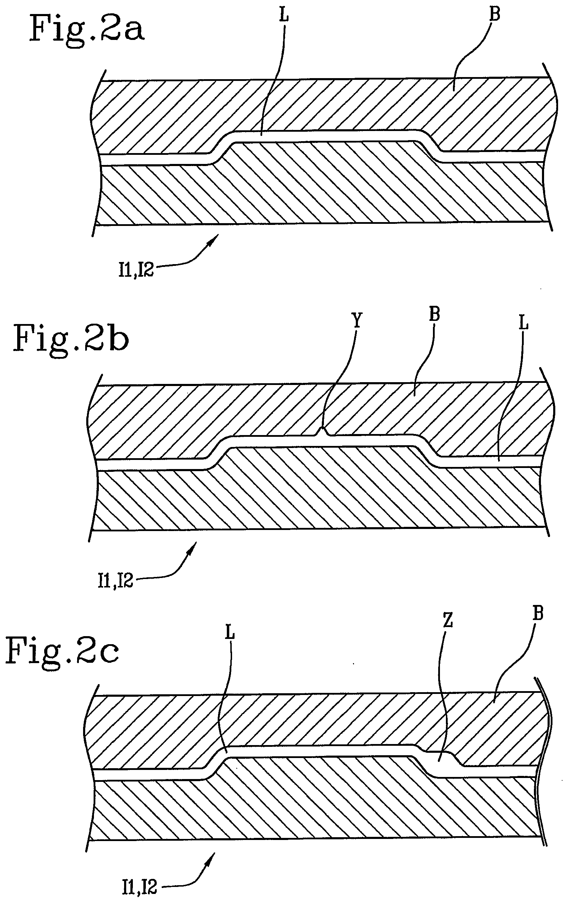

Fig. 2a diagrammatically shows a first main image I1, detected by the detection device 10 according to the above described modes.

In particular, by virtue of the described and claimed parameters, the main image I1 is representative of a portion of first semifinished product 2 having a given length. In fact, by suitably selecting the exposure time T1 in relation to the advancing speed V1 of the first semifinished product 2, it is possible to cause the main image I1 not to be a "snapshot" representation of that which is in front of the first detection device 10 at the moment the image itself is detected.

Vice versa, the main image I1 represents that portion of first semifinished product 2 that has passed in front of the detection device 10 during the exposure time T1. The main image I1 is, in other words, the integral, defined over the whole exposure time T1, of the "snapshot" images that would have been detected during this time space.

Therefore, in accordance with the present invention, the subject to be reproduced (the first semifinished product 2) is moved in a controlled manner, and the views subsequent in time of this subject are superimposed in the same image.

The path followed by the first semifinished product 2 is substantially fixed; in other words, during detection, the first semifinished product 2 is not submitted to other movements, except for running along the established path. Therefore, the main image I1 becomes a sort of "synthesis" representation of a portion of semifinished product 2 of much greater length than the length that the detection device 10 could represent with a snapshot image alone.

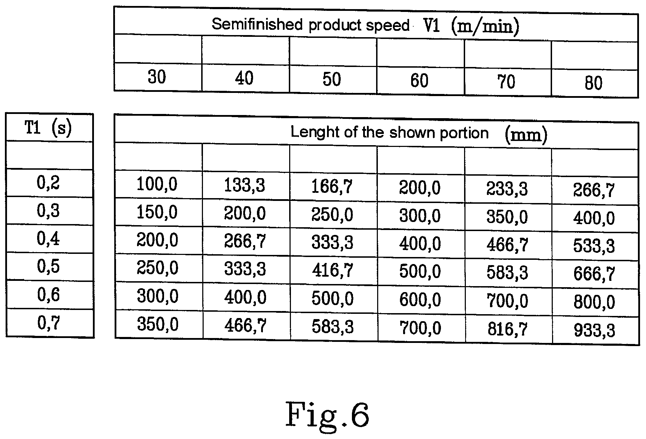

In this regard it is to be considered the table reproduced in Fig. 6. It is possible to see that, a given advancing speed V1 and a given exposure time T1 being provided, a portion of semifinished product of a given length can be represented.

The already mentioned Fig. 2a diagrammatically shows a portion of semifinished product 2 in which undesirable faults or foreign bodies are not present. In the real situation, the background portion B will be substantially black, while the luminous portion L represents the semifinished product 2.

Fig. 2b on the contrary shows a main image I1 in which it is possible to see a fault or foreign body Y. Note that for example when there are problems of lack of rubber, i.e. a reinforcing thread/wire emerges from the compound instead of being fully buried therein, a variation in two parameters occurs:
- the reflectivity of the region in which the thread/wire emerges;
- the profile geometry of the semifinished product, taking into account the fact that the thread/wire in a non-correct position (or the absence of rubber) define a shape different from that of a semifinished product under optimal conditions. For this reason the detection device 10 is able to provide images highlighting this type of critical state.

Fig. 2c further shows a main image I1 in which a fault Z probably due to an irregular width of the semifinished product in the considered stretch thereof can be seen.

Said one or more main images I1 detected by the first detection device 10 are compared with one or more prestored first parameters P1. Depending on this comparison, a notification signal S is generated.

In more detail, the prestored first parameters P1 are representative, to some extend, of the quality that is expected from the first semifinished product 2.

If the first semifinished product 2 is in accordance with the expected standards, no notification signal can be generated or a "positive" notification signal can be generated, i.e. a signal indicating that the semifinished product in question has the predetermined quality requirements.

Vice versa, if the semifinished product has lack of rubber and/or foreign bodies are present that can create problems to the tyre possibly manufactured using that semifinished product, a notification signal S is generated that indicates the problem.

Preferably, the first parameters P1 are defined based on previous detecting operations carried out by the detection device 10 on the first semifinished product 2.

More particularly, at the starting instants (about 2 seconds) in which the first semifinished product 2 is running in front of the first detection device 10, it is assumed that the first semifinished product 2 is of optimal (or at least acceptable) quality and a series of descriptive parameters of this portion of semifinished product 2 are detected.

These parameters will then be used for defining the first parameters P1 for evaluating the quality of the whole semifinished product 2.

By way of example, parameters of geometric and/or optical character can be considered.

Advantageously, the first parameters P1 are determined, as a function of the previous detecting operations, through procedures of the statistical type; for example, mean, variance, etc. can be considered.

A further datum that can be conveniently taken into account is the number of "pieces", i.e. of distinct elements that can be identified in the detected images.

A solution of this type enables the computational activity carried out to be sped up, which activity is substantially performed in real time, and is particularly useful in the embodiment (described in the following) in which two semifinished products are analysed simultaneously.

It is also to be pointed out that the calculation speed obtained with the method of the invention enables the notification signal S to be supplied in real time and in a reliable manner, without affecting the so-called "cycle time" i.e. the preparation time of the semifinished product 2 and the tyre building time.

Preferably, the activity performed downstream of the detection of the main images I1 can comprise a geometrical characterisation of the first semifinished product 2; i.e. the sizes of the semifinished product can be calculated so as to control that also these values fall within predetermined standards.

In the context of Fig. 1a (production and storage of the first semifinished product 2), the notification signal S can be of different types. A first type of signal S1 can be a "direct" type, i.e. a signal of the acoustic and/or visual type, intended for the operator who is in the vicinity of the plant and has to control the correct operation of same.

A signal of this type can be generated when a fault is detected in the first semifinished product 2 of such an importance that it is advisable to stop operation of the machinery for a short period of time, manually eliminate the portion of heavily impaired semifinished product and start the plant again immediately afterwards. In this case the semifinished product will be at all events characterised by a fault due to the joint created after elimination of the portion to be discarded; this fault however will be detected in the subsequent controls carried out in the context of Fig. 1b and the related strip-like element will be eliminated without any problem and particular loss of time during the tyre building step.

A different type of notification signal S can consist of a signal incorporating an overall quality parameter (or quality index) of a semifinished product reel. Contents of this signal are suitably stored and evaluated: should the parameter indicate that the overall quality of the reel is unacceptable, the reel is directly eliminated from the production process, so as to avoid important waste of time during building of the tyre. In fact, if the reel were not discarded, and should the semifinished product be unwound and cut to size for obtaining respective strip-like elements, the latter in any case would be almost fully discarded by the controls carried out at this point with the result that building of the tyre would be uselessly delayed.

If, on the contrary, the descriptive parameter of the reel quality falls within a range of acceptability, the reel is stored and when necessary picked up for contributing in building a tyre.

Advantageously, as already mentioned, the method and apparatus of the invention are also applied during building of the tyre, just before the semifinished product is cut to size for obtaining the strip-like elements. This is mainly done for the following purposes:
- carrying out a redundant control, so as to detect faults possibly not detected before storage of the reel;
- detecting possible foreign bodies perhaps inserted into the reel during winding (i.e. downstream of the previous control), or remaining parts of the film used for preventing the different reel coils from adhering to each other;
- detecting and discarding portions of semifinished product containing joints due to the manual elimination activity carried out during production of the semifinished product itself.

Therefore, for generating the notification signal S the following can be done during winding of the material into a reel:
- drawing homologous data from the main images I1, i.e. data comparable with the first parameters P1;
- determining a difference between these data and the first parameters P1; this difference is therefore representative of the diversity between the semifinished product under examination and the expected standards;
- if the difference is too marked, i.e. if a first threshold THR1 is exceeded, a notification signal S is generated, or also an alarm signal, in this case addressed to the operator that must quickly carry out removal and discarding of the faulty portion of semifinished product;
- if the difference remains under the threshold THR1, a synthetic parameter PX is calculated which is representative of the whole semifinished product that at this point is wound up into a reel.

Parameter PX therefore takes into account all faults that, although present in the semifinished product, are not of such a nature as to cause generation of the alarm signal.

The synthetic parameter PX is incorporated into the notification signal S and can then be evaluated both in an automatic manner through a suitable comparison algorithm, and in a "manual" manner if the value of the synthetic parameter PX is made available to an operator who is able to carry out the correct choice, i.e. to select those reels alone that have a value of the synthetic parameter PX within a given range for that tyre building operation in which said reels are to be used.

At all events, if the synthetic parameter PX is within an acceptability range, the reel is stored waiting for being used in a tyre building process.

If, on the contrary, parameter PX is out of the acceptability range, the reel is discarded. This second case occurs if the reel has no faults of particularly critical level (otherwise production would have been stopped, due to the control carried out through the first threshold THR1), but the number of faults of medium-low level is so big that in any case it would lead to discarding of most of the strip-like elements provided by said reel.

In a preferred embodiment, the information obtained through detection and processing of the main images I1 can be stored in an electronic archive so that a trace of the data relating to the process can be kept both for statistical purposes and for control *a posteriori* of the carried out activity.

Advantageously, the method according to the invention comprises provision of a second detection device 30 on the opposite side of the first detection device 10 relative to the first semifinished product 2. In other words, the second detection device 30 is such positioned as to detect the surface of the first semifinished product 2 opposite to that detected by the first detection device 10.

Practically, as shown by way of example in Figs. 1a and 1b, the first detection device 10 operates on the "right" surface of the first semifinished product 2, while the second detection device 30 operates on the "left" surface of the first semifinished product 2.

Preferably, operation of the second detection device 30 is quite similar to that of the first detection device 10. Preferably, the second detection device 30 comprises a digital camera. By way of example, a digital camera provided with monochromatic CCD detector or sensor can be used. Preferably, the second detection device 30 comprises one lens. More preferably, the second detection device 30 also comprises a filter to optimise the detecting operation. In particular the filter can be useful for coupling with the second emitter device to be described in the following.

Through the second detection device 30 at least one auxiliary image I2 of the first semifinished product 2 is detected. As said, the auxiliary image I2 represents the first semifinished product 2 from a different point of view than the main image I1. Preferably, the second detection device 30 detects a plurality of auxiliary images I2 of the first semifinished product 2.

The second detection device 30 is such controlled that the exposure time T2 for detection of said at least one auxiliary image I2 is included between about 0.1 s and about 1 s. Preferably, the exposure time T1 for the auxiliary image I2 is included between about 0.2 s and about 0.7 s and more preferably between about 0.4 s and about 0.6 s.

In a preferred embodiment, the second detection device 30 is provided with one acquisition window similar to the acquisition window 50 (Fig. 3) of the first detection device 10, having a given major extension direction; the first advancing direction D1 of the first semifinished product 2 is substantially orthogonal to said major extension direction.

Practically, taking the horizontal ground surface as the reference, the major extension direction of the acquisition window of the second detection device 30 can be substantially horizontal, while the advancing direction D1 of the first semifinished product 2 can be substantially vertical, or at least can have an important component in the vertical direction.

By way of example, the greater size of the acquisition window can be included between about 400 and about 800 pixels, while the smaller size can be included between about 50 and about 200 pixels.

Preferably, the method of the invention further comprises provision of at least one second emitter device 40 to send a second emitted radiation R2a to the first semifinished product 2.

The second detection device 30 is thus coupled to the second emitter device 40 for receiving a second reflected radiation R2b from the first semifinished product 2 and detecting said at least one auxiliary image I2.

Preferably, the second emitter device 40 is substantially identical with the first emitter device 20.

The second emitted radiation R2a can preferably be laser radiation, in particular emitted from a diode; by way of example, the second emitted radiation R2a can have a wavelength included between about 600 nm and about 650 nm.

Preferably, the second emitted radiation R2a is a so-called "laser blade", i.e. radiation that, when it strikes on a surface substantially orthogonal to its propagation direction, generates a substantially linear, practically rectangular, luminous shape having one dimension much greater than the other.

Preferably, the first emitted radiation R1a and second emitted radiation R2a substantially have the same features.

As diagrammatically shown in Figs. 1a and 1b, the second detection device 30 and the second emitter device 40 can have a particular mutual positioning.

Specifically, the second detection device 30 is positioned along a second detection axis DA2 joining the second detection device 30 to the portion of the first semifinished product 2 impinged on by the second emitted radiation R2a emitted by the second emitter device 40.

The second emitter device 40 on the contrary is positioned along a second emission axis EA2 joining the second emitter device 40 to the first-semifinished product portion impinged on by the second emitted radiation R2a.

Preferably, the second detection axis DA2 defines an angle α2 included between about 30° and about 60° with the second emission axis EA2. By way of example, angle α2 can be of about 45°.

In this way, on detection, a good compromise is obtained between intensity of the detected radiation and capability of evaluating the detected thickness of the first semifinished product 2.

Said one or more auxiliary images I2 detected by the second detection device 30 are compared with one or more prestored second parameters P2. Depending on this comparison, the notification signal S is generated, if necessary.

The prestored second parameters P2 are quite identical with the aforesaid first parameters P1. In fact, the second parameters P2 are calculated following the same techniques as described above with reference to the first parameters P1. Preferably, the second parameters P2 are calculated based on previously detected information on the first semifinished product 2. Advantageously, said detecting operations can be carried out by the second detection device 30. In particular, calculation of the second parameters P2 is carried out on a statistical basis, depending on the previous detecting operations.

In a different embodiment, the second parameters P2 are identical with the first parameters P1.

In a preferred embodiment, the method and apparatus in accordance with the invention not only operate on the aforesaid first semifinished product 2, but also on a second semifinished product 4.

This embodiment is diagrammatically shown in Fig. 4, as well as in Figs. 1a and 1b.

In greater detail, in this case according to the method the second semifinished product 4 too is moved, at a second speed V2, relative to the first detection device 10 and the second detection device 30.

The second semifinished product 4 is in particular moved along a second advancing direction D2. The second speed V2 is included between about 0.1 m/s and about 2 m/s. Preferably, the second speed V2 is included between about 0.5 m/s and about 1.4 m/s, and more preferably between about 0.8 m/s and about 1.2 m/s. Preferably the second speed V2 is substantially the same as the first speed V1.

Preferably, the second advancing direction D2 is substantially parallel to the first advancing direction D1.

Therefore, the second semifinished product 4 is submitted to the operations carried out by the emission devices 20, 40 and the detection devices 10, 30 in the same manner as the first semifinished product 2. Therefore, said at least one main image I1 and at least one auxiliary image I2 are representative of the second semifinished product 4 too.

By way of example, Fig. 5 diagrammatically shows an image in which both the first semifinished product 2 and the second semifinished product 4 are represented.

The above description referring to accomplishment of the method according to the invention for the first semifinished product 2 remains preferably substantially unchanged in the embodiment also contemplating the presence of the second semifinished product 4. In this case, the technique used for determining the main I1 and auxiliary I2 images is substantially the same.

Preferably substantially the same is the technique used for determining the parameters P1, P2.

Preferably, also substantially the same are the evaluation criteria used for generating the notification signal S.

Preferably, if also the second semifinished product 4 is provided, the actuating member M can comprise of two distinct drawing/winding devices substantially operated in the same manner. Alternatively the drawing/winding device can be only one and have two distinct portions that are substantially integral with each other and each dedicated to the first semifinished product 2 and the second semifinished product 4, respectively.

As already mentioned, the invention also refers to an apparatus for controlling production and feeding of semifinished products in a tyre building process.

This apparatus comprises:
- the first image detection device 10;
- the actuating member M for moving the first semifinished product 2 and preferably also the second semifinished product 4;
- a control unit 100 configured for:
   - controlling the actuating member M in such a manner that the first speed V1 takes the above stated values and preferably the second speed V2 takes the above described values;
   - controlling the first detection device 10 in such a manner that the exposure time T1 for detection of said at least one main image I1 takes the above described values.

The control unit 100 is further configured for carrying out the first comparison between said main image I1 and the prestored first parameters P1.

Preferably, apparatus 1 further comprises the second detection device 30.

Preferably, the control unit 100 is configured for controlling the second detection device 30 in such a manner that the exposure time T2 for detection of said at least one auxiliary image I2 takes the above described values.

Preferably, the control unit 100 is further configured for also carrying out the second comparison between said at least one auxiliary image I2 and the prestored second parameters P2.

Preferably, the control unit 100 is further configured for determining the prestored first parameters P1 and/or the prestored second parameters P2 following the above described techniques.

Depending on the first comparison and/or the second comparison, the control unit 100 generates the notification signal S.

Preferably, apparatus 1 further comprises the first emitter device 20.

Preferably, apparatus 1 further comprises the second emitter device 40.

In a preferred embodiment, apparatus 1 also comprises an optical decentralisation system (not shown), associated with the first detection device 10 and/or the second detection device 20.

This decentralisation system can be advantageous in particular should not the detection devices be positioned in the most appropriate location, due to bulkiness problems, and therefore should be placed at positions that would make detection inaccurate or even impossible.

## Claims

1. A method for controlling production and feeding of semifinished products in a tyre building process, comprising:
- providing at least one first image-detection device (10);
- moving at least one first semifinished product (2) at a first speed (V1) relative to said first detection device (10), along a first advancing direction (D1);
- detecting at least one main image (I1) of said first semifinished product (2) through said first detection device (10);
- controlling movement of said first semifinished product (2) in such a manner that said first speed (V1) is included between about 0.1 m/s and about 2 m/s;
- controlling said first detection device (10) in such a manner that the exposure time (T1) for detecting said at least one main image (I1) is included between about 0.1 s and about 1 s;
- carrying out a first comparison between said main image (I1) and one or more prestored first parameters (P1);
- generating a notification signal (S) as a function of said first comparison.

2. A method as claimed in claim 1, wherein said first detection device (10) is provided with an acquisition window (50) having a major extension direction (X1), said first advancing direction (D1) of the first semifinished product (2) being substantially orthogonal to said major extension direction (X1).

3. A method as claimed in anyone of the preceding claims, further comprising provision of at least one first emitter device (20) for sending a first emitted radiation (R1a) towards said first semifinished product (2),
said first detection device (10) being coupled to said first emitter device (20) for receiving a first reflected radiation (R1b) from said first semifinished product (2) and detecting said at least one main image (I1).

4. A method as claimed in claim 3, wherein said first detection device (10) is positioned along a first detection axis (DA1) joining said first detection device (10) to the portion of said first semifinished product (2) impinged on by the first emitted radiation (R1a) emitted by said first emitter device (20).

5. A method as claimed in claim 3 or 4, wherein said first emitter device (20) is positioned along a first emission axis (EA1) joining said first emitter device (20) to the portion of the first semifinished product (2) impinged on by said first emitted radiation (R1a).

6. A method as claimed in claim 5 when depending on claim 4, wherein said first detection axis (DA1) defines an angle (α1) included between about 30° and about 60° with said first emission axis (EA1).

7. A method as claimed in anyone of the preceding claims, wherein said prestored first parameters (P1) are defined as a function of previous detecting operations on said first semifinished product (2) carried out by said first detection device (10).

8. A method as claimed in claim 7, wherein said first parameters (P1) are defined on a statistical basis, as a function of said previous detecting operations.

9. A method as claimed in anyone of the preceding claims, further comprising:
- providing a second detection device (30) on the opposite side of said first detection device (10) relative to said first semifinished product (2);
- through said second detection device (30), detecting at least one auxiliary image (I2) of said first semifinished product (2);
- controlling said second detection device (30) in such a manner that the exposure time (T2) for detection of said at least one auxiliary image (I2) is included between about 0.1 s and about 1 s;
- carrying out a second comparison between said auxiliary image (I2) and one or more prestored second parameters (P2);
- generating a notification signal (S) as a function of said second comparison.

10. A method as claimed in claim 9, further comprising provision of at least one second emitter device (40) for sending a second emitted radiation (R2a) towards said first semifinished product (2), said second detection device (30) being coupled to said second emitter device (40) for receiving a second reflected radiation (R2b) from said first semifinished product (2) and detecting said at least one auxiliary image (I2).

11. A method as claimed in claim 10, wherein said second detection device (30) is positioned along a second detection axis (DA2) joining said second detection device (30) to the portion of said first semifinished product (2) impinged on by the second emitted radiation (R2a) emitted by said second emitter device (40).

12. A method as claimed in claim 10 or 11, wherein said second emitter device (40) is positioned along a second emission axis (EA2) joining said second emitter device (40) to the portion of said first semifinished product (2) impinged on by said second emitted radiation (R2a).

13. A method as claimed in anyone of claims 9 to 12, wherein said prestored second parameters (P2) are defined as a function of previous detecting operations on said first semifinished product (2).

14. A method as claimed in claim 13, wherein said previous detecting operations on said first semifinished product (2) are carried out by said second detection device (30).

15. A method as claimed in anyone of claims 9 to 14, further comprising:
- moving a second semifinished product (4) at a second speed (V2) relative to said first detection device (10) and second detection device (30), along a second advancing direction (D2),
- said second speed (V2) being included between about 0.1 m/s and about 2 m/s,
- said main image (I1) and auxiliary image (I2) being also representative of said second semifinished product (4).

16. A method as claimed in claim 15, wherein the second speed (V2) is substantially the same as the first speed (V1).

17. A method as claimed in claim 15 or 16, wherein the second advancing direction (D2) is substantially parallel to the first advancing direction (D1).

18. An apparatus for controlling production and feeding of semifinished products in a tyre building process, comprising:
- at least one first image-detection device (10);
- an actuating member (M) for moving at least one first semifinished product (2) at a first speed (V1) relative to said first detection device (10), along a first advancing direction (D1), said first detection device (10) being configured for detecting at least one main image (I1) of said first semifinished product (2);
- a control unit (100) configured for:
• controlling said actuating member (M) in such a manner that said first speed (V1) is included between about 0.1 m/s and about 2 m/s;
• controlling said first detection device (10) in such a manner that the exposure time (T1) for detection of said at least one main image (I1) is included between about 0.1 s and about 1 s;
- carrying out a first comparison between said main image (I1) and one or more prestored first parameters (P1);
• generating a notification signal (S) as a function of said first comparison.

19. An apparatus as claimed in claim 18, wherein said first detection device (10) is provided with an acquisition window (50) having a major extension direction (X1), said first advancing direction (D1) of the first semifinished product (2) being substantially orthogonal to said major extension direction (X1).

20. An apparatus as claimed in either of claims 18 or 19, further comprising at least one first emitter device (20) for sending a first emitted radiation (R1a) towards said first semifinished product (2), said first detection device (10) being coupled to said first emitter device (20) for receiving a first reflected radiation (R1b) from said first semifinished product (2) and detecting said at least one main image (I1).

21. An apparatus as claimed in anyone of claims 18 to 20, wherein said control unit (100) is configured for defining said prestored first parameters (P1) as a function of previous detecting operations on said first semifinished product (2) carried out by said first detection device (10).

22. An apparatus as claimed in anyone of claims 18 to 21, further comprising:
- a second detection device (30) positioned on the opposite side of said first detection device (10) relative to said semifinished product (2), and provided for detecting at least one auxiliary image (I2) of said first semifinished product (2),
- said control unit (100) being operatively associated with said second detection device (30) for controlling the latter in such a manner that the exposure time (T2) for detection of said at least one auxiliary image (I2) is included between about 0.1 s and about 1 s,
- said control unit (100) being configured for:
- carrying out a second comparison between said auxiliary image (I2) and one or more prestored second parameters (P2);
- generating a notification signal (S) as a function of said second comparison.

23. An apparatus as claimed in claim 22, further comprising at least one second emitter device (40) for sending a second emitted radiation (R2a) towards said first semifinished product (2),
- said second detection device (30) being coupled to said second emitter device (40) for receiving a second reflected radiation (R2b) from said first semifinished product (2) and detecting said auxiliary image (I2).

24. An apparatus as claimed in anyone of claims 22 to 23, wherein said control unit (100) is configured for defining said prestored second parameters (P2) as a function of previous detecting operations on said first semifinished product (2).

25. An apparatus as claimed in anyone of claims 22 to 24, wherein said actuating member (M) is designed to move a second semifinished product (4) at a second speed (V2) relative to said first detection device (10) and second detection device (30), along a second advancing direction (D2),
said second speed (V2) being included between about 0.1 m/s and about 2 m/s,
said main image (I1) and auxiliary image (I2) being representative of said second semifinished product (4) too.

## Patentansprüche

1. Verfahren zur Kontrolle der Fertigung und Zuführung von Halbfabrikaten bei einem Reifenaufbauprozess, umfassend:
- Bereitstellen mindestens einer ersten Bilderfassungseinrichtung (10);
- Bewegen mindestens eines ersten Halbfabrikats (2) mit einer ersten Geschwindigkeit (V1) relativ zu der ersten Erfassungseinrichtung (10), längs einer ersten Bewegungsrichtung (D1);
- Erfassen mindestens eines Hauptbildes (I1) von dem ersten Halbfabrikat (2) durch die erste Erfassungseinrichtung (10);
- Steuern der Bewegung des ersten Halbfabrikats (2) derart, dass die erste Geschwindigkeit (V1) im Bereich zwischen etwa 0,1 m/s und etwa 2 m/s enthalten ist;
- Steuern der ersten Erfassungseinrichtung (10) derart, dass die Belichtungszeit (T1) zum Erfassen des mindestens einen Hauptbildes (I1) im Bereich zwischen etwa 0,1 s und etwa 1 s enthalten ist;
- Durchführen eines ersten Vergleichs zwischen dem Hauptbild (I1) und einem oder mehreren vorgespeicherten ersten Parameter(n) (P1);
- Erzeugen eines Benachrichtigungssignals (S) in Abhängigkeit von dem ersten Vergleich.

2. Verfahren nach Anspruch 1, wobei die erste Erfassungseinrichtung (10) mit einem Aufnahmefenster (50) bereitgestellt wird, das eine Hauptausdehnungsrichtung (X1) aufweist, wobei die erste Bewegungsrichtung (D1) des ersten Halbfabrikats (2) im Wesentlichen orthogonal zu der Hauptausdehnungsrichtung (X1) ist.

3. Verfahren nach einem der vorhergehenden Ansprüche, ferner ein Bereitstellen mindestens einer ersten Strahlereinrichtung (20) zum Aussenden erster emittierter Strahlung (R1 a) in Richtung des ersten Halbfabrikats (2) umfassend,
wobei die erste Erfassungseinrichtung (10) an die erste Strahlereinrichtung (20) gekoppelt ist, um erste reflektierte Strahlung (R1 b) von dem ersten Halbfabrikat (2) zu empfangen und das mindestens eine Hauptbild (I1) zu erfassen.

4. Verfahren nach Anspruch 3, wobei die erste Erfassungseinrichtung (10) längs einer ersten Erfassungsachse (DA1) positioniert ist, welche die erste Erfassungseinrichtung (10) mit dem Abschnitt des ersten Halbfabrikats (2) verbindet, in den die erste emittierte Strahlung (R1a), die von der ersten Strahlereinrichtung (20) emittiert wurde, einfällt.

5. Verfahren nach Anspruch 3 oder 4, wobei die erste Strahlereinrichtung (20) längs einer ersten Abstrahlachse (EA1) positioniert ist, welche die erste Strahlereinrichtung (20) mit dem Abschnitt des ersten Halbfabrikats (2) verbindet, in den die erste emittierte Strahlung (R1a) einfällt.

6. Verfahren nach Anspruch 5, wenn abhängig von Anspruch 4, wobei die erste Erfassungsachse (DA1) einen Winkel (α1) mit der ersten Abstrahlachse (EA1) definiert, der im Bereich zwischen etwa 30° und etwa 60° enthalten ist.

7. Verfahren nach einem der vorhergehenden Ansprüche, wobei die vorgespeicherten ersten Parameter (P1) in Abhängigkeit von vorhergehenden Erfassungsoperationen an dem ersten Halbfabrikat (2) definiert werden, die von der ersten Erfassungseinrichtung (10) durchgeführt wurden.

8. Verfahren nach Anspruch 7, wobei die ersten Parameter (P1) auf einer statistischen Grundlage in Abhängigkeit von vorhergehenden Erfassungsoperationen definiert werden.

9. Verfahren nach einem der vorhergehenden Ansprüche, ferner umfassend:
- Bereitstellen einer zweiten Erfassungseinrichtung (30) auf der der ersten Erfassungseinrichtung (10) gegenüberliegenden Seite, bezogen auf das erste Halbfabrikat (2);
- Erfassen, durch die zweite Erfassungseinrichtung (30), mindestens eines Zusatzbildes (I2) von dem ersten Halbfabrikat (2);
- Steuern der zweiten Erfassungseinrichtung (30) derart, dass die Belichtungszeit (T2) zur Erfassung des mindestens einen Zusatzbildes (I2) im Bereich zwischen etwa 0,1 s und etwa 1 s enthalten ist;
- Durchführen eines zweiten Vergleichs zwischen dem Zusatzbild (I2) und einem oder mehreren vorgespeicherten zweiten Parameter(n) (P2);
- Erzeugen eines Benachrichtigungssignals (S) in Abhängigkeit von dem zweiten Vergleich.

10. Verfahren nach Anspruch 9, ferner ein Bereitstellen mindestens einer zweiten Strahlereinrichtung (40) zum Aussenden zweiter emittierter Strahlung (R2a) in Richtung des ersten Halbfabrikats (2) umfassend, wobei die zweite Erfassungseinrichtung (30) an die zweite Strahlereinrichtung (40) gekoppelt ist, um zweite reflektierte Strahlung (R2b) von dem ersten Halbfabrikat (2) zu empfangen und das mindestens eine Zusatzbild (I2) zu erfassen.

11. Verfahren nach Anspruch 10, wobei die zweite Erfassungseinrichtung (30) längs einer zweiten Erfassungsachse (DA2) positioniert ist, welche die zweite Erfassungseinrichtung (30) mit dem Abschnitt des ersten Halbfabrikats (2) verbindet, in den die zweite emittierte Strahlung (R2a), die von der zweiten Strahlereinrichtung (40) emittiert wurde, einfällt.

12. Verfahren nach Anspruch 10 oder 11, wobei die zweite Strahlereinrichtung (40) längs einer zweiten Abstrahlachse (EA2) positioniert ist, welche die zweite Strahlereinrichtung (40) mit dem Abschnitt des ersten Halbfabrikats (2) verbindet, in den die zweite emittierte Strahlung (R2a) einfällt.

13. Verfahren nach einem der Ansprüche 9 bis 12, wobei die vorgespeicherten zweiten Parameter (P2) in Abhängigkeit von vorhergehenden Erfassungsoperationen an dem ersten Halbfabrikat (2) definiert sind.

14. Verfahren nach Anspruch 13, wobei die vorhergehenden Erfassungsoperationen an dem ersten Halbfabrikat (2) von der zweiten Erfassungseinrichtung (30) durchgeführt worden sind.

15. Verfahren nach einem der Ansprüche 9 bis 14, ferner umfassend:
- Bewegen eines zweiten Halbfabrikats (4) mit einer zweiten Geschwindigkeit (V2) relativ zu der ersten Erfassungseinrichtung (10) und der zweiten Erfassungseinrichtung (30), längs einer zweiten Bewegungsrichtung (D2),
- wobei die zweite Geschwindigkeit (V2) im Bereich zwischen etwa 0,1 m/s und etwa 2 m/s enthalten ist,
- wobei das Hauptbild (I1) und das Zusatzbild (I2) auch das zweite Halbfabrikat (4) darstellend sind.

16. Verfahren nach Anspruch 15, wobei die zweite Geschwindigkeit (V2) im Wesentlichen die gleiche wie die erste Geschwindigkeit (V1) ist.

17. Verfahren nach Anspruch 15 oder 16, wobei die zweite Bewegungsrichtung (D2) im Wesentlichen parallel zur ersten Bewegungsrichtung (D1) ist.

18. Vorrichtung zur Kontrolle der Fertigung und Zuführung von Halbfabrikaten bei einem Reifenaufbauprozess, umfassend:
- mindestens eine erste Bilderfassungseinrichtung (10);
- ein Betätigungsorgan (M) zum Bewegen mindestens eines ersten Halbfabrikats (2) mit einer ersten Geschwindigkeit (V1) relativ zu der ersten Erfassungseinrichtung (10), längs einer ersten Bewegungsrichtung (D1), wobei die erste Erfassungseinrichtung (10) dafür ausgelegt ist, mindestens ein Hauptbild (I1) von dem ersten Halbfabrikat (2) zu erfassen;
- eine Steuereinheit (100), die dafür ausgelegt ist:
• das Betätigungsorgan (M) derart zu steuern, dass die erste Geschwindigkeit (V1) im Bereich zwischen etwa 0,1 m/s und etwa 2 m/s enthalten ist;
• die erste Erfassungseinrichtung (10) derart zu steuern, dass die Belichtungszeit (T1) zum Erfassen des mindestens einen Hauptbildes (I1) im Bereich zwischen etwa 0,1 s und etwa 1 s enthalten ist;
• einen ersten Vergleich zwischen dem Hauptbild (I1) und einem oder mehreren vorgespeicherten ersten Parameter(n) (P1) durchzuführen;
• ein Benachrichtigungssignal (S) in Abhängigkeit von dem ersten Vergleich zu erzeugen.

19. Vorrichtung nach Anspruch 18, wobei die erste Erfassungseinrichtung (10) mit einem Aufnahmefenster (50) bereitgestellt ist, das eine Hauptausdehnungsrichtung (X1) aufweist, wobei die erste Bewegungsrichtung (D1) des ersten Halbfabrikats (2) im Wesentlichen orthogonal zu der Hauptausdehnungsrichtung (X1) ist.

20. Vorrichtung nach einem der Ansprüche 18 oder 19, ferner mindestens eine erste Strahlereinrichtung (20) zum Aussenden erster emittierter Strahlung (R1a) in Richtung des ersten Halbfabrikats (2) umfassend, wobei die erste Erfassungseinrichtung (10) an die erste Strahlereinrichtung (20) gekoppelt ist, um erste reflektierte Strahlung (R1b) von dem ersten Halbfabrikat (2) zu empfangen und das mindestens eine Hauptbild (I1) zu erfassen.

21. Vorrichtung nach einem der Ansprüche 18 bis 20, wobei die Steuereinheit (100) dafür ausgelegt ist, die vorgespeicherten ersten Parameter (P1) in Abhängigkeit von vorhergehenden Erfassungsoperationen an dem ersten Halbfabrikat (2) zu definieren, die von der ersten Erfassungseinrichtung (10) durchgeführt wurden.

22. Vorrichtung nach einem der Ansprüche 18 bis 21, ferner umfassend:
- eine zweite Erfassungseinrichtung (30), die auf der der ersten Erfassungseinrichtung (10) gegenüberliegenden Seite, bezogen auf das erste Halbfabrikat (2), positioniert und dafür bereitgestellt ist, mindestens ein Zusatzbild (I2) von dem ersten Halbfabrikat (2) zu erfassen,
- wobei die Steuereinheit (100) mit der zweiten Erfassungseinrichtung (30) wirkverbunden ist, um die Letztere derart zu steuern, dass die Belichtungszeit (T2) zur Erfassung des mindestens einen Zusatzbildes (I2) im Bereich zwischen etwa 0,1 s und etwa 1 s enthalten ist;
- wobei die Steuereinheit (100) ausgelegt ist zum:
- Durchführen eines zweiten Vergleichs zwischen dem Zusatzbild (I2) und einem oder mehreren vorgespeicherten zweiten Parameter(n) (P2);
- Erzeugen eines Benachrichtigungssignals (S) in Abhängigkeit von dem zweiten Vergleich.

23. Vorrichtung nach Anspruch 22, ferner mindestens eine zweite Strahlereinrichtung (40) zum Aussenden zweiter emittierter Strahlung (R2a) in Richtung des ersten Halbfabrikats (2) umfassend,
- wobei die zweite Erfassungseinrichtung (30) an die zweite Strahlereinrichtung (40) gekoppelt ist, um zweite reflektierte Strahlung (R2b) von dem ersten Halbfabrikat (2) zu empfangen und das Zusatzbild (I2) zu erfassen.

24. Vorrichtung nach einem der Ansprüche 22 bis 23, wobei die Steuereinheit (100) dafür ausgelegt ist, die vorgespeicherten zweiten Parameter (P2) in Abhängigkeit von vorhergehenden Erfassungsoperationen an dem ersten Halbfabrikat (2) zu definieren.

25. Vorrichtung nach einem der Ansprüche 22 bis 24, wobei das Betätigungsorgan (M) dazu bestimmt ist, ein zweites Halbfabrikat (4) mit einer zweiten Geschwindigkeit (V2) relativ zu der ersten Erfassungseinrichtung (10) und der zweiten Erfassungseinrichtung (30), längs einer zweiten Bewegungsrichtung (D2) zu bewegen,
wobei die zweite Geschwindigkeit (V2) im Bereich zwischen etwa 0,1 m/s und etwa 2 m/s enthalten ist,
wobei das Hauptbild (I1) und das Zusatzbild (I2) auch das zweite Halbfabrikat (4) darstellend sind.

## Revendications

1. Procédé de commande de production et d'alimentation en produits semi-finis dans un processus de construction de pneu, comprenant le fait :
- de fournir au moins un premier dispositif de détection d'image (10) ;
- de déplacer au moins un premier produit semi-fini (2) à une première vitesse (V1) par rapport audit premier dispositif de détection (10), le long d'une première direction d'avancement (D1) ;
- de détecter au moins une image principale (I1) dudit premier produit semi-fini (2) par le biais dudit premier dispositif de détection (10) ;
- de commander le déplacement dudit premier produit semi-fini (2) de telle manière que ladite première vitesse (V1) soit comprise entre environ 0,1 m/s et environ 2 m/s ;
- de commander ledit premier dispositif de détection (10) de telle manière que le temps d'exposition (T1) pour la détection de ladite au moins une image principale (I1) soit compris entre environ 0,1 s et environ 1 s ;
- d'effectuer une première comparaison entre ladite image principale (I1) et un ou plusieurs premier(s) paramètre(s) préenregistré(s) (P1) ;
- de générer un signal de notification (S) en fonction de ladite première comparaison.

2. Procédé tel que revendiqué dans la revendication 1, dans lequel ledit premier dispositif de détection (10) est pourvu d'une fenêtre d'acquisition (50) ayant une direction d'extension majeure (X1), ladite première direction d'avancement (D1) du premier produit semi-fini (2) étant essentiellement orthogonale à ladite direction d'extension majeure (X1).

3. Procédé tel que revendiqué dans l'une quelconque des revendications précédentes, comprenant en outre le fait de fournir au moins un premier dispositif émetteur (20) pour envoyer un premier rayonnement émis (R1a) vers ledit premier produit semi-fini (2),
ledit premier dispositif de détection (10) étant couplé audit premier dispositif émetteur (20) pour recevoir un premier rayonnement réfléchi (R1b) à partir dudit premier produit semi-fini (2) et pour détecter ladite au moins une image principale (I1).

4. Procédé tel que revendiqué dans la revendication 3, dans lequel ledit premier dispositif de détection (10) est positionné le long d'un premier axe de détection (DA1) reliant ledit premier dispositif de détection (10) à la partie dudit premier produit semi-fini (2) recevant le premier rayonnement (R1a) émis par ledit premier dispositif émetteur (20).

5. Procédé tel que revendiqué dans la revendication 3 ou 4, dans lequel ledit premier dispositif émetteur (20) est positionné le long d'un premier axe d'émission (EA1) reliant ledit premier dispositif émetteur (20) à la partie du premier produit semi-fini (2) recevant ledit premier rayonnement émis (R1a).

6. Procédé tel que revendiqué dans la revendication 5 lorsqu'elle dépend de la revendication 4, dans lequel ledit premier axe de détection (DA1) définit un angle (α1) compris entre environ 30° et environ 60° avec ledit premier axe d'émission (EA1).

7. Procédé tel que revendiqué dans l'une quelconque des revendications précédentes, dans lequel lesdits premiers paramètres préenregistrés (P1) sont définis en fonction des opérations de détection précédentes sur ledit premier produit semi-fini (2) effectuées par ledit premier dispositif de détection (10).

8. Procédé tel que revendiqué dans la revendication 7, dans lequel lesdits premiers paramètres (P1) sont définis sur une base statistique, en fonction desdites opérations de détection précédentes.

9. Procédé tel que revendiqué dans l'une quelconque des revendications précédentes, comprenant en outre le fait :
- de fournir un deuxième dispositif de détection (30) sur le côté opposé dudit premier dispositif de détection (10) par rapport audit premier produit semi-fini (2) ;
- de détecter, par le biais dudit deuxième dispositif de détection (30), au moins une image auxiliaire (I2) dudit premier produit semi-fini (2) ;
- de commander ledit deuxième dispositif de détection (30) de telle manière que le temps d'exposition (T2) pour la détection de ladite au moins une image auxiliaire (I2) soit compris entre environ 0,1 s et environ 1 s ;
- d'effectuer une deuxième comparaison entre ladite image auxiliaire (I2) et un ou plusieurs deuxième(s) paramètre(s) préenregistré(s) (P2) ;
- de générer un signal de notification (S) en fonction de ladite deuxième comparaison.

10. Procédé tel que revendiqué dans la revendication 9, comprenant en outre le fait de fournir au moins un deuxième dispositif émetteur (40) pour envoyer un deuxième rayonnement émis (R2a) vers ledit premier produit semi-fini (2), ledit deuxième dispositif de détection (30) étant couplé audit deuxième dispositif émetteur (40) pour recevoir un deuxième rayonnement réfléchi (R2b) à partir dudit premier produit semi-fini (2) et pour détecter ladite au moins une image auxiliaire (I2).

11. Procédé tel que revendiqué dans la revendication 10, dans lequel ledit deuxième dispositif de détection (30) est positionné le long d'un deuxième axe de détection (DA2) reliant ledit deuxième dispositif de détection (30) à la partie dudit premier produit semi-fini (2) recevant le deuxième rayonnement (R2a) émis par ledit deuxième dispositif émetteur (40).

12. Procédé tel que revendiqué dans la revendication 10 ou 11, dans lequel ledit deuxième dispositif émetteur (40) est positionné le long d'un deuxième axe d'émission (EA2) reliant ledit deuxième dispositif émetteur (40) à la partie dudit premier produit semi-fini (2) recevant ledit deuxième rayonnement émis (R2a).

13. Procédé tel que revendiqué dans l'une quelconque des revendications 9 à 12, dans lequel lesdits deuxièmes paramètres préenregistrés (P2) sont définis en fonction des opérations de détection précédentes sur ledit premier produit semi-fini (2).

14. Procédé tel que revendiqué dans la revendication 13, dans lequel lesdites opérations de détection précédentes sur ledit premier produit semi-fini (2) sont effectuées par ledit deuxième dispositif de détection (30).

15. Procédé tel que revendiqué dans l'une quelconque des revendications 9 à 14, comprenant en outre le fait :
- de déplacer un deuxième produit semi-fini (4) à une deuxième vitesse (V2) par rapport audit premier dispositif de détection (10) et audit deuxième dispositif de détection (30), le long d'une deuxième direction d'avancement (D2),
- ladite deuxième vitesse (V2) étant comprise entre environ 0,1 m/s et environ 2 m/s,
- ladite image principale (I1) et ladite image auxiliaire (I2) représentant également ledit deuxième produit semi-fini (4).

16. Procédé tel que revendiqué dans la revendication 15, dans lequel la deuxième vitesse (V2) est essentiellement la même que la première vitesse (V1).

17. Procédé tel que revendiqué dans la revendication 15 ou 16, dans lequel la deuxième direction d'avancement (D2) est essentiellement parallèle à la première direction d'avancement (D1).

18. Appareil de commande de production et d'alimentation en produits semi-finis dans un processus de construction de pneu, comprenant :
- au moins un premier dispositif de détection d'image (10) ;
- un organe d'actionnement (M) pour déplacer au moins un premier produit semi-fini (2) à une première vitesse (V1) par rapport audit premier dispositif de détection (10), le long d'une première direction d'avancement (D1), ledit premier dispositif de détection (10) étant configuré pour détecter au moins une image principale (I1) dudit premier produit semi-fini (2) ;
- une unité de commande (100) configurée :
• pour commander ledit organe d'actionnement (M) de telle manière que ladite première vitesse (V1) soit comprise entre environ 0,1 m/s et environ 2 m/s ;
• pour commander ledit premier dispositif de détection (10) de telle manière que le temps d'exposition (T1) pour la détection de ladite au moins une image principale (I1) soit compris entre environ 0,1 s et environ 1 s ;
• pour effectuer une première comparaison entre ladite image principale (I1) et un ou plusieurs premier(s) paramètre(s) préenregistré(s) (P1) ;
• pour générer un signal de notification (S) en fonction de ladite première comparaison.

19. Appareil tel que revendiqué dans la revendication 18, dans lequel ledit premier dispositif de détection (10) est pourvu d'une fenêtre d'acquisition (50) ayant une direction d'extension majeure (X1), ladite première direction d'avancement (D1) du premier produit semi-fini (2) étant essentiellement orthogonale à ladite direction d'extension majeure (X1).

20. Appareil tel que revendiqué dans l'une quelconque des revendications 18 ou 19, comprenant en outre au moins un premier dispositif émetteur (20) pour envoyer un premier rayonnement émis (R1a) vers ledit premier produit semi-fini (2), ledit premier dispositif de détection (10) étant couplé audit premier dispositif émetteur (20) pour recevoir un premier rayonnement réfléchi (R1b) à partir dudit premier produit semi-fini (2) et pour détecter ladite au moins une image principale (I1).

21. Appareil tel que revendiqué dans l'une quelconque des revendications 18 à 20, dans lequel ladite unité de commande (100) est configurée pour définir lesdits premiers paramètres préenregistrés (P1) en fonction des opérations de détection précédentes sur ledit premier produit semi-fini (2) effectuées par ledit premier dispositif de détection (10).

22. Appareil tel que revendiqué dans l'une quelconque des revendications 18 à 21, comprenant en outre :
- un deuxième dispositif de détection (30) positionné sur le côté opposé dudit premier dispositif de détection (10) par rapport audit produit semi-fini (2), et prévu pour détecter au moins une image auxiliaire (I2) dudit premier produit semi-fini (2),
- ladite unité de commande (100) étant associée de manière fonctionnelle audit deuxième dispositif de détection (30) pour commander ce dernier de telle manière que le temps d'exposition (T2) pour la détection de ladite au moins une image auxiliaire (I2) soit compris entre environ 0,1 s et environ 1 s,
- ladite unité de commande (100) étant configurée :
- pour effectuer une deuxième comparaison entre ladite image auxiliaire (I2) et un ou plusieurs deuxième(s) paramètre(s) préenregistré(s) (P2) ;
- pour générer un signal de notification (S) en fonction de ladite deuxième comparaison.

23. Appareil tel que revendiqué dans la revendication 22, comprenant en outre au moins un deuxième dispositif émetteur (40) pour envoyer un deuxième rayonnement émis (R2a) vers ledit premier produit semi-fini (2),
- ledit deuxième dispositif de détection (30) étant couplé audit deuxième dispositif émetteur (40) pour recevoir un deuxième rayonnement réfléchi (R2b) à partir dudit premier produit semi-fini (2) et pour détecter ladite image auxiliaire (I2).

24. Appareil tel que revendiqué dans l'une quelconque des revendications 22 à 23, dans lequel ladite unité de commande (100) est configurée pour définir lesdits deuxièmes paramètres préenregistrés (P2) en fonction des opérations de détection précédentes sur ledit premier produit semi-fini (2).

25. Appareil tel que revendiqué dans l'une quelconque des revendications 22 à 24, dans lequel ledit organe d'actionnement (M) est conçu pour déplacer un deuxième produit semi-fini (4) à une deuxième vitesse (V2) par rapport audit premier dispositif de détection (10) et audit deuxième dispositif de détection (30), le long d'une deuxième direction d'avancement (D2),
ladite deuxième vitesse (V2) étant comprise entre environ 0,1 m/s et environ 2 m/s,
ladite image principale (I1) et ladite image auxiliaire (I2) représentant aussi ledit deuxième produit semi-fini (4).
